# DEMANDE DE BREVET EUROPEEN

(11) **EP 1 813 334 A2**
(43) Date de publication de la demande: **01.08.2007**
(21) Numéro de dépôt: 07300744.5
(22) Date de dépôt: 25.01.2007
(51) Int. Cl.: B01D 11/02, A45D 40/00, B65D 85/804

(54) **Procédé de préparation d'une composition cosmétique, et appareil pour la mise en oeuvre d'un tel procédé**

(30) Priorité: 27.01.2006 FR 0650304
(71) Demandeur: L'ORÉAL, 75008 Paris (FR)
(72) Inventeur: De la Mettrie, Roland, 78110 Le Vesinet (FR); Grollier, Jean-François, 75006 Paris (FR); Cotteret, Jean, 78480 Verneuil sur Seine (FR)
(74) Mandataire: Tanty, François

(57) **Abrégé**

La présente invention concerne un procédé de préparation d'une composition cosmétique, comportant l'étape consistant à :
- injecter dans une pluralité d'enceintes contenant des produits différents au moins un fluide à l'aide d'une pluralité d'injecteurs (41) de façon à produire une pluralité de solutions qui après mélange forme tout ou partie de la composition cosmétique.

## Description

La présente invention concerne les compositions cosmétiques et plus particulièrement celles obtenues par circulation d'un fluide au contact d'un produit ayant au moins un composé pouvant être extrait par le fluide.

Les demandes de brevet européen EP 1 563 827-A2, EP 1 566 164-A1, EP 1 563 885-A1, EP 1 559 400-A1, EP 1 559 398-A1, EP 1 563 826-A1, EP 1 559 414-A1, EP 1 563 826-A1, EP 1 559 401-A1, EP 1 559 392-A1, EP 1 559 396-A1 et EP 1 566 163-Al divulguent des procédés de préparation d'une composition cosmétique par percolation d'un fluide.

La demande WO 00/56629 divulgue une cartouche pour appareil d'extraction par percolation.

Il existe un besoin pour perfectionner les procédés de préparation de compositions cosmétiques.

Il existe encore un besoin pour préparer des compositions cosmétiques personnalisées d'une façon fiable et relativement simple et pour faciliter le conditionnement et l'utilisation des produits servant à préparer ces compositions.

L'invention vise à répondre à tout ou partie de ces besoins.

L'invention a ainsi pour objet, selon l'un de ses aspects, un procédé de préparation d'une composition cosmétique, comportant l'étape consistant à :
- injecter dans une pluralité d'enceintes contenant des produits différents au moins un fluide à l'aide d'une pluralité d'injecteurs de façon à produire une pluralité de solutions qui, après mélange, forme tout ou partie de la composition cosmétique.

Comparativement à l'utilisation d'un seul injecteur, l'utilisation de plusieurs injecteurs peut réduire le risque de contamination d'une enceinte par un produit provenant d'une autre enceinte.

Cela peut également permettre, éventuellement, une simplification des opérations à effectuer pour la préparation de la composition cosmétique et en particulier conduire à un gain de temps.

Le fluide peut être injecté dans la pluralité d'enceintes à l'aide d'injecteurs respectivement associés aux différentes enceintes de cette pluralité d'enceintes.

Une enceinte peut être un compartiment, notamment un compartiment d'une cartouche.

L'invention peut faciliter la préparation d'une composition cosmétique à partir de plusieurs produits contenus dans des enceintes différentes. L'invention peut permettre de préparer une composition personnalisée, en sélectionnant les enceintes dans lesquelles l'injection a lieu.

Le procédé peut comporter la sélection d'au moins une propriété désirée de la composition cosmétique ou d'au moins un niveau pour une propriété donnée de la composition cosmétique et le contrôle de l'injection du fluide peut s'effectuer de façon à obtenir la propriété sélectionnée et/ou son niveau attendu. La propriété sélectionnée peut être relative à la couleur de la composition ou à son pouvoir colorant. L'invention peut également faciliter le conditionnement et la conservation des produits servant à préparer la composition, en permettant d'utiliser des produits non liquides.

Enfin, l'invention peut faciliter l'utilisation de produits d'origine naturelle, notamment d'extraits végétaux ou minéraux.

La circulation du fluide dans la ou les enceintes peut être une percolation.

Par « percolation », on désigne le passage d'un fluide à travers un milieu perméable à ce fluide, le milieu étant par exemple pulvérulent. Le milieu peut être entièrement solubilisé par le passage du fluide, le cas échéant. Le milieu peut être non alimentaire.

Le fluide, encore appelé percolat éventuellement, peut comporter un liquide et/ou un gaz, par exemple de l'eau. Le fluide peut être de l'eau. D'autres solvants sont utilisables, par exemple une solution alcoolique ou huileuse.

Les injecteurs peuvent servir à l'injection d'un même fluide ou de fluides différents.

La quantité de produit contenue dans une enceinte peut être relativement faible, correspondant par exemple à une dose unique. La quantité de produit est par exemple inférieure ou égale à 25 cm³, ou à 10 cm³, voire à 7,5 cm³ ou 5 cm³.

Une fois l'extraction par le fluide effectuée, l'enceinte correspondante peut être éliminée, étant par exemple recyclée.

Les enceintes disposées sur l'appareil d'extraction peuvent appartenir ou non à une même recharge.

Le fluide peut circuler de façon simultanée ou non dans les différentes enceintes de la pluralité d'enceintes.

Chaque injecteur peut subir, le cas échéant, entre les étapes d'injection de fluide, un nettoyage, par exemple par circulation du fluide dans et/ou sur l'injecteur. Les injecteurs peuvent encore être amovibles, afin de faciliter leur nettoyage.

L'une au moins des enceintes peut comporter un agent de coloration des matières kératiniques, par exemple la peau, les lèvres, les cheveux et autres fibres kératiniques telles que les cils et sourcils.

Différentes enceintes d'une même recharge peuvent comporter des agents de coloration différents, voire un même agent de coloration à des concentrations différentes.

Une même recharge peut comporter des agents de coloration permettant d'obtenir plusieurs nuances d'une même couleur.

Le ou les agents de coloration peuvent être destinés à réaliser une coloration directe ou d'oxydation, éclaircissante ou non. Il peut s'agir par exemple d'une coloration ton sur ton.

Le ou les agents de coloration peuvent être des colorants directs ou des colorants d'oxydation.

L'injection peut s'effectuer dans au moins une enceinte sélectionnée parmi plusieurs.

Préalablement à la sélection d'au moins une enceinte, au moins une information liée à une personne à traiter avec la composition cosmétique peut être acquise, et la sélection de la ou des enceintes peut être effectuée sur la base de cette information au moins.

L'information peut comporter une couleur, par exemple celle de la peau ou des cheveux de la personne à traiter avec la composition.

La sélection des enceintes peut viser, par exemple, à reproduire une teinte de peau ou de cheveux. La sélection peut encore avoir pour but, par exemple, de reproduire une couleur choisie par un utilisateur sur un nuancier ou méchier ou correspondant à une référence commerciale.

Les produits contenus dans les enceintes peuvent être pulvérulents.

Une même enceinte peut comporter, le cas échéant, au moins deux composés pulvérulents. Ces deux composés peuvent être mélangés uniformément ou non au sein de l'enceinte. Les composés peuvent par exemple être disposés dans l'enceinte en strates successives.

La température du fluide injecté dans une enceinte peut être supérieure à 80 °C, ce qui peut favoriser la solubilisation de certains composés, le fluide étant éventuellement sous phases vapeur et liquide, ce qui peut faciliter l'extraction.

La pression d'injection est de préférence supérieure ou égale à 1 bar (10⁵ Pa), voire supérieure ou égale à 3 bars et encore plus préférentiellement supérieure ou égale à 10 bars, allant par exemple de 10 à 50 bars.

La ou les solutions issues de l'extraction peuvent être recueillies dans un récipient, par exemple un bol.

Le récipient peut être muni ou non d'un organe de fermeture, notamment à des fins d'agitation et/ou afin de permettre au consommateur d'emporter la composition pour l'utiliser ailleurs que sur le lieu de préparation.

Le récipient peut éventuellement contenir au moins un composé à mélanger avec la ou les solutions issues de l'extraction, notamment un milieu cosmétiquement acceptable, par exemple une base ou un oxydant de coloration.

Les enceintes peuvent être définies chacune au moins partiellement par une première paroi pouvant être traversée, par exemple perforée, par au moins un injecteur de l'appareil d'extraction.

Les enceintes peuvent également être définies chacune au moins partiellement par une deuxième paroi pouvant s'ouvrir sous l'effet de la pression d'injection du fluide dans l'enceinte, par exemple du fait de la déformation de la deuxième paroi contre au moins un relief adapté à provoquer son ouverture. La deuxième paroi est par exemple déformée contre une grille agencée pour que la déformation s'accompagne de l'ouverture de l'enceinte tout en permettant à la deuxième paroi de retenir sensiblement le produit non solubilisé par le fluide ayant circulé dans l'enceinte.

Les première et deuxième parois comportent par exemple au moins une couche d'un matériau pouvant être déchiré et/ou perforé relativement aisément, par exemple une couche comportant un métal, par exemple de l'aluminium, d'épaisseur inférieure ou égale à 0,1 mm par exemple.

L'invention a encore pour objet, selon un autre de ses aspects, un ensemble permettant de préparer une composition cosmétique, comportant :
- une pluralité d'enceintes contenant des produits cosmétiques différents,
- un appareil d'extraction comportant une pluralité d'injecteurs afin d'injecter au moins un fluide dans au moins une enceinte et recueillir au moins une solution par circulation du fluide dans cette enceinte.

Un seul injecteur peut être utilisé à la fois ou en variante plusieurs injecteurs peuvent être utilisés au même moment pour l'injection du fluide. L'utilisation d'un seul injecteur peut par exemple permettre de respecter plus facilement une pression d'injection et peut simplifier la fabrication de l'appareil d'extraction.

L'appareil peut comporter un système d'injection et un système de support des enceintes, et l'un au moins du système d'injection et du système de support peut être agencé de manière à permettre de sélectionner les enceintes dans lesquelles le fluide est injecté.

La sélection de la ou des enceintes où s'effectue l'injection du fluide se fait par exemple grâce à des moyens de contrôle du débit de fluide dans chacun des injecteurs.

En variante ou additionnellement, cette sélection peut s'effectuer grâce à un positionnement adéquat des injecteurs relativement aux enceintes.

Les enceintes peuvent être rapportées sur l'appareil d'extraction ou appartenir à celui-ci.

Les enceintes peuvent appartenir à une même recharge ou non. Cette recharge peut comporter une cartouche renfermant la pluralité d'enceintes. La recharge peut encore comporter une pluralité de capsules solidaires au moins lors de l'utilisation, définissant respectivement les différentes enceintes.

Le système de support peut être agencé pour permettre de déplacer les enceintes relativement au système d'injection. Ce déplacement peut s'effectuer manuellement ou de façon motorisée, en rotation ou en translation ou autrement encore, par exemple de façon à amener au moins un injecteur à pénétrer dans une enceinte sélectionnée.

L'appareil d'extraction peut comporter un système de chauffage pour porter la température du fluide à plus de 80 °C avant l'injection, comme mentionné précédemment.

Lorsque les enceintes comportent des agents de coloration, l'appareil d'extraction peut comporter un système de sélection agencé d'une part pour permettre à un utilisateur de sélectionner une teinte parmi plusieurs, et d'autre part pour commander l'injection du fluide afin de recueillir une composition cosmétique dont la teinte correspond à la teinte sélectionnée. Le système de sélection peut par exemple agir sur des moyens de contrôle du débit de fluide dans les différents injecteurs de façon à ce que des quantités de fluide prédéfinies traversent les différentes enceintes.

Le système de sélection peut comporter un micro-ordinateur ou tout autre système informatique.

L'invention a encore pour objet, selon un autre de ses aspects, un appareil d'extraction permettant de faire circuler, notamment percoler, un fluide dans au moins une enceinte afin de préparer une composition cosmétique, comportant :
- un système d'injection comportant une pluralité d'injecteurs pour injecter au moins un fluide dans une pluralité d'enceintes,
- un système de support de la pluralité d'enceintes,
- un système de collecte des solutions provenant de la circulation du fluide dans les enceintes, agencé pour mélanger les solutions.

Le système de collecte comporte par exemple un récipient placé sous les enceintes et/ou des canaux permettant de guider l'écoulement du fluide après traversée des enceintes.

La pluralité d'enceintes peut appartenir à une même recharge, les enceintes étant par exemple contenues dans une cartouche.

Au moins deux enceintes peuvent être séparées par une cloison à l'intérieur de la recharge.

Les enceintes peuvent être distribuées angulairement autour d'un axe de la recharge ou être alignées ou disposées circulairement ou autrement encore.

La recharge peut comporter un corps réalisé au moins partiellement par moulage d'une matière thermoplastique ou par emboutissage et/ou pliage ou thermoformage d'un matériau en feuille.

La pluralité d'enceintes peut encore être définie par une pluralité de capsules distinctes, liées ou non entre elles.

Les capsules peuvent être portées par un élément de support, lequel peut avoir une forme annulaire ou allongée, par exemple. L'élément de support peut être réalisé d'une seule pièce avec au moins une portion des capsules, le cas échéant.

Les capsules peuvent être disposées en rangées ou autrement.

Chaque enceinte peut être associée à au moins un joint d'étanchéité agencé pour coopérer avec au moins un injecteur. Ce joint d'étanchéité est par exemple une membrane en un matériau élastiquement déformable, agencée pour être traversée par l'injecteur.

Chaque enceinte peut être sensiblement étanche à l'air.

La recharge peut comporter un détrompeur afin de permettre sa mise en place sur un appareil d'extraction dans une orientation prédéfinie.

L'un au moins des produits contenus dans les enceintes peut comporter un agent de coloration des matières kératiniques, comme évoqué plus haut. La pluralité d'enceintes peut notamment comporter une pluralité d'agents de coloration des matières kératiniques ayant des couleurs différentes, afin de permettre de préparer une composition cosmétique ayant une teinte personnalisée, par exemple.

Les composés contenus dans les différentes enceintes peuvent être tous différents, le cas échéant.

Les produits contenus dans les enceintes sont avantageusement pulvérulents, ou en variante gélifiés, pâteux ou liquides.

Parmi les produits pouvant être contenus dans les différentes enceintes solidaires de l'appareil d'extraction, par exemple appartenant à une même recharge, les combinaisons suivantes sont possibles, entre autres :
- un premier produit comportant un premier agent de coloration, contenu dans une première enceinte et un deuxième produit comportant un deuxième agent de coloration, différent du premier, contenu dans une deuxième enceinte,
- un premier produit comportant un premier actif cosmétique ou dermatologique contenu dans une première enceinte et un deuxième produit comportant un deuxième actif cosmétique ou dermatologique, différent du premier, contenu dans une deuxième enceinte,
- un premier produit comportant un premier extrait végétal ou minéral, contenu dans une première enceinte et un deuxième produit comportant un deuxième extrait végétal ou minéral, différent du premier, contenu dans une deuxième enceinte,

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique en perspective un exemple de recharge selon l'invention,
- la figure 2 est une coupe axiale de la recharge de la figure 1,
- la figure 3 est une section transversale selon III-III de la figure 2,
- la figure 4 est une vue analogue à la figure 3 d'une variante de réalisation,
- la figure 5 est une vue analogue à la figure 2 d'une variante de réalisation,
- la figure 6 représente en perspective, de manière partielle, un exemple d'appareil d'extraction pouvant être utilisé pour la préparation de la composition cosmétique,
- la figure 7 est une coupe axiale, partielle, de la recharge en place dans l'appareil d'extraction,
- la figure 8 illustre le positionnement des injecteurs relativement aux compartiments,
- la figure 9 représente, de façon schématique et simplifiée, le circuit d'alimentation de l'appareil d'extraction,
- la figure 10 représente en perspective un autre exemple de recharge selon l'invention et illustre le positionnement correspondant des injecteurs,
- la figure 11 est une coupe transversale selon XI-XI de la figure 10,
- la figure 12 est une vue de dessus d'un autre exemple de recharge selon l'invention,
- la figure 13 est une section selon XIII-XIII de la figure 12,
- la figure 14 est une vue de dessus d'un autre exemple de recharge selon l'invention, et
- la figure 15 illustre de manière schématique et partielle une autre possibilité de positionnement des différents injecteurs relativement à une pluralité d'enceintes indépendantes.

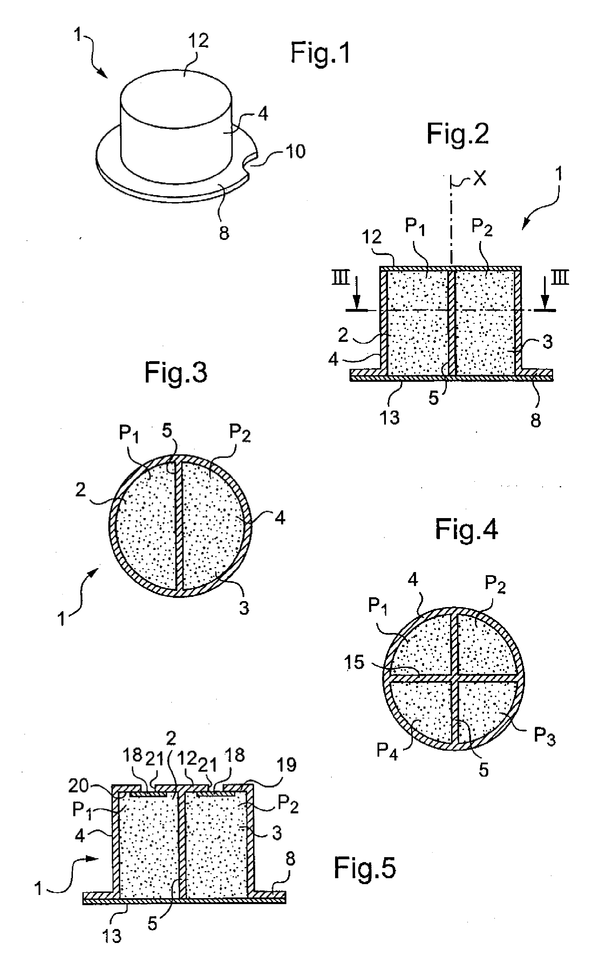

On a représenté aux figures 1 à 3 une recharge 1 selon un exemple de mise en oeuvre de l'invention, se présentant sous la forme d'une cartouche.

La recharge 1 comporte par exemple au moins deux produits P₁ et P₂ respectivement contenus de manière séparée dans au moins deux enceintes 2 et 3 définies par celle-ci.

Dans un exemple, les enceintes 2 et 3 sont formées par deux compartiments d'un corps tubulaire 4, étant séparées par une unique cloison 5. Cette dernière est par exemple réalisée par moulage de matière d'une seule pièce avec le corps 4.

Dans l'exemple illustré, le corps 4 est réalisé avec une collerette 8 à une extrémité et présente par exemple une forme généralement symétrique de révolution autour d'un axe X.

La collerette 8 peut être munie d'un détrompeur 10 se présentant par exemple sous la forme d'un relief en creux ou en saillie, par exemple une encoche.

En l'absence de détrompeur 10, le corps 4 peut être réalisé par exemple avec une forme non symétrique de révolution, de façon à ne permettre son positionnement dans l'appareil d'extraction associé que d'une seule manière.

Le corps 4 est fermé supérieurement par une première paroi 12 et inférieurement par une deuxième paroi 13.

Les parois 12 et 13 comportent par exemple un film qui est thermoscellé sur le corps 4 et la cloison 5 de façon à fermer de façon étanche à l'air les enceintes 2 et 3. Ce film comporte par exemple au moins une couche d'un métal, notamment de l'aluminium.

Le volume de chacune des enceintes 2 et 3 est de préférence inférieur ou égal à 25 cm³ ou 10 cm³, étant par exemple compris entre 1 et 5 cm³.

Bien entendu, on peut apporter diverses modifications à la forme de la recharge 1 sans sortir du cadre de la présente invention.

Le nombre d'enceintes contenues dans la recharge 1 peut notamment être différent de deux, étant par exemple compris entre 2 et 10, étant par exemple de quatre comme illustré à la figure 4.

On voit sur cette figure que la recharge 1 peut comporter au moins une deuxième cloison 15 délimitant avec la cloison 5 quatre enceintes, ce qui permet de contenir deux produits supplémentaires P₃ et P₄ de façon séparée des produits P₁ et P₂.

La recharge 1 peut comporter, le cas échéant, une première paroi 12 qui est réalisée au moins partiellement d'une seule pièce avec le corps 4, par exemple par moulage.

La première paroi 12 peut alors, par exemple, être traversée par des ouvertures 21 respectivement associées aux différentes enceintes, comme illustré à la figure 5.

Les ouvertures 21 peuvent être obturées de façon à permettre l'entrée des injecteurs de l'appareil d'extraction associé.

L'obturation peut se faire par exemple au moyen d'opercules 18 thermosoudés sur la face intérieure 20 de la première paroi 12. En variante, les opercules 18 sont fixés extérieurement sur la première paroi 12 ou surinjectés sur celle-ci, dans une matière élastomère par exemple. Les opercules 18 peuvent encore être réalisés d'une seule pièce avec la première paroi 12 et dans la même matière, en donnant localement à la première paroi 12 une épaisseur réduite ou en réalisant des zones d'affaiblissement. Les opercules 18 peuvent être agencés pour être perforés ou détachés au moins partiellement de la première paroi 12, lors de l'injection.

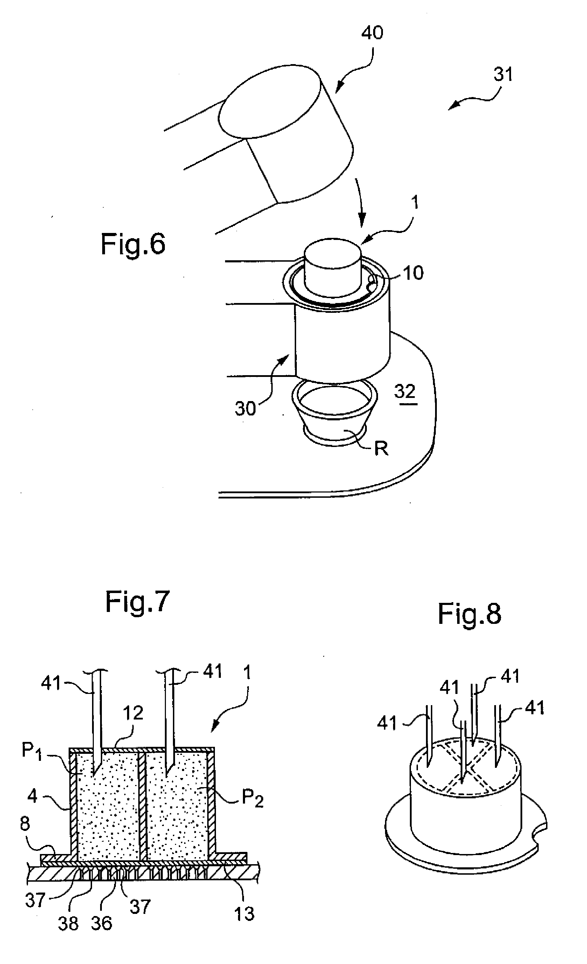

Pour utiliser la recharge 1 de la figure 4, l'utilisateur peut la placer sur un système de support 30 d'un appareil d'extraction 31 comportant également un système d'injection 40, tel qu'illustré à la figure 6.

L'appareil d'extraction 31 comporte dans l'exemple considéré un espace 32 sous le système de support 30 pour accueillir un récipient R permettant de recueillir une solution provenant de la percolation d'un fluide dans la ou les enceintes de la recharge sélectionnées par l'utilisateur.

Le système de support 30 peut comporter comme illustré à la figure 7 une grille 36 pourvue de reliefs 37 contre lesquels la deuxième paroi 13 peut être appliquée sous la pression du fluide injecté dans l'enceinte sélectionnée.

La deuxième paroi 13 est agencée pour être perforée par les reliefs 37 de la grille, ce qui permet au fluide injecté de s'écouler par des canaux 38 de la grille 36 vers le récipient R.

L'ouverture de la deuxième paroi 13 peut avantageusement s'effectuer de façon à sensiblement retenir dans l'enceinte considérée les particules de produit non solubilisées.

Le récipient R peut être suffisamment large pour recueillir les solutions s'écoulant des différentes enceintes compte tenu de leur positionnement. Le cas échéant, un système de collecte des solutions peut être prévu pour les acheminer dans le récipient lorsque les enceintes ne sont pas situées à l'aplomb de celui-ci.

Le système d'injection 40 comprend, comme on peut le voir sur les figures 7 et 8, plusieurs injecteurs 41 capables de franchir la première paroi 12 et de pénétrer dans les enceintes correspondantes.

L'appareil d'extraction 31 peut comporter des moyens d'étanchéité non représentés permettant de garantir, si nécessaire, une pénétration étanche de chaque injecteur 41 dans l'enceinte correspondante.

Ces moyens d'étanchéité comportent par exemple au moins un joint d'étanchéité s'appliquant extérieurement sur la recharge, au moins lors de l'injection.

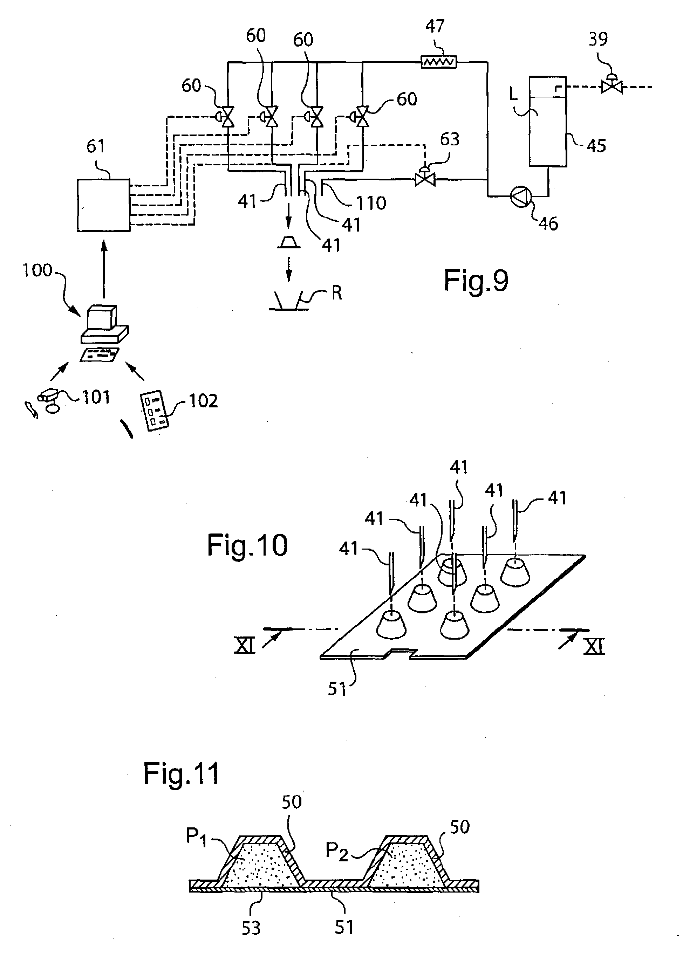

L'appareil d'extraction 31 peut comporter un circuit d'alimentation des injecteurs 41 en fluide d'extraction ayant, comme représenté de façon schématique à la figure 9, au moins un réservoir 45 pour contenir le liquide L destiné à être injecté, au moins une pompe 46 et au moins un organe de chauffage 47 permettant de porter le liquide L à la température souhaitée et de créer le cas échéant de la vapeur. Celle-ci peut contribuer à générer la pression d'injection recherchée.

Dans l'exemple considéré, la pression d'injection du fluide est par exemple d'au moins 3 bars et préférentiellement d'au moins 10 bars et la température d'injection par exemple d'au moins 80 °C. La température du fluide peut notamment être suffisante pour que le fluide présente des phases liquides et gazeuses lorsqu'il est injecté dans l'enceinte sélectionnée.

Le réservoir 45 de l'appareil d'extraction peut être rempli manuellement ou de façon automatique en étant relié à une conduite d'eau, par exemple par l'intermédiaire d'une électrovanne 39.

Le réservoir 45 peut être amovible, le cas échéant, afin de faciliter son remplissage manuel.

L'organe de chauffage 47 peut comporter une résistance électrique.

L'appareil d'extraction peut comporter, comme illustré à la figure 9, une pluralité d'organes de contrôle du débit 60, associés chacun à un injecteur 41 et commandés par un système de contrôle 61 de façon par exemple à ce que seul le ou les injecteurs 41 sélectionnés soient alimentés par le fluide à injecter.

La quantité de fluide percolant dans la ou les enceintes sélectionnées peut être prédéfinie ou être choisie en fonction par exemple de la concentration recherchée pour le ou les composés extraits par percolation.

Les organes de contrôle du débit 60 sont par exemple des électrovannes proportionnelles permettant un réglage du débit dans chaque injecteur autre qu'un réglage en tout ou rien. Il s'agit par exemple d'organes de contrôle 60 piézoélectriques. Le réglage du débit peut encore être en tout ou rien.

En réglant les différents débits, plusieurs nuances peuvent être obtenues, par exemple.

L'utilisateur peut par exemple sélectionner au moins un couple d'enceintes permettant d'obtenir par mélange des solutions d'extraction une nuance colorée ou colorante particulière.

Les injecteurs 41 sont par exemple agencés de manière à tous pénétrer dans les enceintes associées de la recharge, comme illustré à la figure 7, l'injection du fluide n'ayant lieu que dans la ou les enceintes sélectionnées grâce au contrôle du débit.

En variante, le système d'injection est agencé de telle manière que les injecteurs 41 et/ou les enceintes puissent être déplacés les uns relativement aux autres de façon à ce que seul le ou les injecteurs 41 alimentés pénètrent dans la ou les enceintes correspondantes. La pression du fluide d'injection peut par exemple contribuer à déplacer l'injecteur lorsque celui-ci est alimenté, de façon à ce qu'il pénètre dans l'enceinte correspondante.

On a également illustré à la figure 9 la possibilité pour le circuit d'alimentation d'échanger des informations avec un système informatique 100 qui comporte par exemple au moins un micro-ordinateur, assistant personnel numérique, terminal relié à un réseau ou téléphone portable, voire qui est intégré à l'appareil d'extraction.

Ce système informatique 100 peut être associé par exemple à un système d'acquisition d'informations comportant par exemple une caméra 101 ou tout autre dispositif d'analyse des matières kératiniques, par exemple de la couleur de la peau ou des cheveux.

Le système informatique 100 peut également être associé à un nuancier ou méchier 102 ou autre outil d'évaluation, par exemple un questionnaire.

Le système informatique 100 peut être agencé de manière à permettre à un utilisateur de sélectionner au moins une caractéristique de la composition cosmétique à préparer au moyen de l'appareil d'extraction et des enceintes contenant les différents produits. Cette caractéristique est par exemple une couleur.

Le système informatique 100 peut être utilisé pour permettre à l'utilisateur de sélectionner une teinte souhaitée et le système informatique 100 peut être agencé pour adresser au système de contrôle 61 des informations permettant à ce dernier de commander l'injection du fluide dans des enceintes prédéfinies de façon à obtenir une composition ayant les propriétés recherchées.

L'utilisateur peut encore sélectionner, en fonction des produits contenus dans les enceintes, une caractéristique de la composition en plus de la couleur ou du pouvoir colorant, par exemple une senteur, une consistance, un ou plusieurs actifs, une durée d'action, une dilution ou une caractéristique permettant d'adapter la composition à un type de peau ou de cheveux, entre autres.

L'appareil d'extraction peut comporter, le cas échéant, une sortie 110 permettant de distribuer dans le récipient R le liquide L sans passage à travers les enceintes, afin par exemple de diluer la ou les solutions issues de la percolation dans le récipient R et obtenir un volume de composition prédéfini.

L'alimentation de la sortie 110 peut se faire par le biais d'une électrovanne 63 ou tout autre moyen de contrôle de la quantité de fluide délivrée, telle que par exemple une pompe.

L'électrovanne 63 est par exemple contrôlée par le système de contrôle 61 de façon à avoir un volume de composition dans le récipient R correspondant à une valeur prédéfinie, en fonction des quantités déjà distribuées suite à l'injection dans la ou les enceintes sélectionnées.

L'appareil d'extraction 31 peut comporter un ou plusieurs clapets et/ou électrovannes non représentés, ainsi qu'un ou plusieurs capteurs de niveau, poids, pression et/ou température, et un système de contrôle des différents organes électriques, électromécaniques et capteurs.

Un capteur de niveau peut être utile par exemple pour détecter le besoin de remplissage du réservoir 45 ou permettre le remplissage du récipient R avec une quantité totale de composition prédéfinie.

Un capteur de poids peut être utile pour déterminer la quantité de composition délivrée dans le récipient R, par exemple.

L'homme du métier pourra se référer utilement, le cas échéant, aux appareils d'extraction utilisés pour préparer des boissons de type « expresso », dont les circuits d'alimentation sont susceptibles d'être au moins partiellement reproduits.

De tels appareils sont divulgués par exemple dans les publications AT 168405, US 2 688 911, DE 3 243 870, IT 1265636 et WO 2004/006740-A2.

La recharge 1 peut se présenter autrement que sous la forme d'une cartouche et par exemple, comme illustré aux figures 10 et 11, avec des enceintes définies par des capsules 50 portées par un élément de support 51 qui se présente par exemple sous la forme d'une plaquette.

Les capsules 50 peuvent comporter une première paroi formée par exemple par emboutissage ou thermoformage d'un matériau en feuille, par exemple de l'aluminium ou un complexe comportant de l'aluminium. Cette paroi ainsi emboutie ou thermoformée peut définir l'élément de support 51 autour des capsules 50.

Les capsules 50 peuvent être fermées par une deuxième paroi 53 qui est par exemple un film thermoscellé sur l'élément de support 51.

L'élément de support 51 peut comporter un détrompeur 56 se présentant par exemple sous la forme d'une encoche.

L'élément de support 51 et les capsules 50 peuvent encore, le cas échéant, être réalisés séparément.

L'élément de support 51 est par exemple réalisé sous la forme d'une plaquette avec des trous et les capsules sont fixées dans ces trous, en fonction par exemple des produits que l'on souhaite associer au sein d'une même recharge.

La fixation des capsules dans les trous de l'élément de support peut être amovible ou non. Une fixation amovible peut permettre le cas échéant à l'utilisateur de remplacer les capsules utilisées par de nouvelles. La fixation amovible peut s'effectuer par friction et/ou encliquetage par exemple.

Dans l'exemple de la figure 10, les capsules 50 sont disposées en rangées.

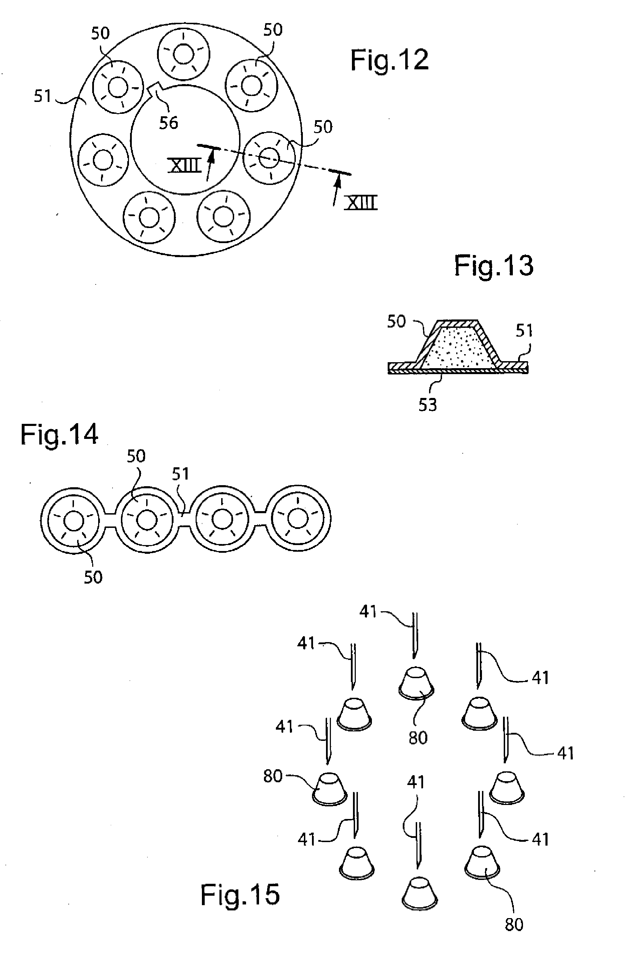

Dans la variante des figures 12 et 13, l'élément de support 51 présente une forme annulaire et dans l'exemple de la figure 14 une forme de bande.

Dans la variante illustrée à la figure 15, les enceintes sont définies par des capsules indépendantes 80 et l'appareil d'extraction comporte une pluralité d'injecteurs associés respectivement à ces différentes capsules.

Le système de support de l'appareil d'extraction comporte par exemple une pluralité de logements permettant d'accueillir ces capsules.

L'injection peut se faire dans une capsule sélectionnée en faisant pénétrer l'injecteur dans l'enceinte correspondante, par exemple par un mouvement de l'injecteur et/ou de la capsule, ce mouvement étant par exemple provoqué par l'action de l'utilisateur sur l'un au moins du système d'injection et du système de support. Ce mouvement peut encore résulter d'un entraînement motorisé, pneumatique ou hydraulique, étant par exemple assisté par la pression du fluide.

L'invention n'est pas limitée aux exemples de mise en oeuvre illustrés.

On peut notamment donner à la recharge d'autres formes encore que celles représentées, par exemple une forme de barquette, sachet ou autre. Des capsules ou sachets contenant des produits différents peuvent être contenus dans un même conditionnement.

Le remplissage des enceintes peut avoir lieu au moment de la fabrication. En variante, les enceintes peuvent être remplies en fonction de la demande d'un consommateur, par exemple.

Différents compartiments d'une même recharge peuvent être fabriqués séparément puis assemblés.

Les enceintes peuvent également être, lors de la fabrication, dans une configuration déployée et cette configuration peut être modifiée au cours de la fabrication et/ou de l'utilisation.

La circulation du fluide dans une enceinte sélectionnée peut s'effectuer verticalement ou autrement.

Dans les exemples illustrés, l'injection dans une enceinte s'effectue par un injecteur unique associé à cette enceinte, mais en variante elle peut s'effectuer avec plusieurs injecteurs, afin par exemple d'améliorer la mise en contact du fluide avec le produit contenu dans l'enceinte ou permettre la mise en contact avec un fluide différent.

L'expression « comportant un » doit être comprise comme étant synonyme de « comportant au moins un », sauf si le contraire est spécifié.

## Revendications

1. Procédé de préparation d'une composition cosmétique, comportant l'étape consistant à :
- injecter dans une pluralité d'enceintes contenant des produits différents au moins un fluide à l'aide d'une pluralité d'injecteurs (41) de façon à produire une pluralité de solutions qui après mélange forme tout ou partie de la composition cosmétique.

2. Procédé selon la revendication 1, dans lequel le fluide est injecté dans la pluralité d'enceintes à l'aide d'injecteurs (41) respectivement associés aux différentes enceintes de la pluralité d'enceintes.

3. Procédé selon la revendication 1 ou 2, la pluralité d'enceintes appartenant à une même recharge (1).

4. Procédé selon la revendication 3, la pluralité d'enceintes étant définie par des compartiments d'une même cartouche.

5. Procédé selon la revendication 1 ou 2, la pluralité d'enceintes n'appartenant pas à une même recharge.

6. Procédé selon l'une quelconque des revendications précédentes, l'injection dans la pluralité d'enceintes ayant lieu simultanément.

7. Procédé selon l'une quelconque des revendications 1 à 5, l'injection dans la pluralité d'enceintes ayant lieu séquentiellement.

8. Procédé selon l'une quelconque des revendications 1 à 7, le fluide étant injecté sous pression et les enceintes étant délimitées au moins partiellement par une paroi (13) pouvant s'ouvrir sous l'effet de la pression du fluide.

9. Procédé selon l'une quelconque des revendications précédentes, l'une au moins des enceintes comportant un agent de coloration des matières kératiniques.

10. Procédé selon l'une quelconque des revendications précédentes, la quantité de fluide injectée dans au moins une enceinte étant contrôlée par au moins un élément de contrôle (60) commandable électriquement.

11. Procédé selon l'une quelconque des revendications précédentes, l'injection de fluide dans la pluralité d'enceintes s'effectuant de façon à avoir un volume de composition cosmétique prédéfini.

12. Procédé selon l'une quelconque des revendications précédentes, les enceintes étant définies au moins partiellement par une paroi perforable (12) et les injecteurs étant agencés pour perforer cette paroi.

13. Procédé selon l'une quelconque des revendications précédentes, comportant la sélection d'au moins une propriété désirée de la composition cosmétique ou d'au moins un niveau pour une propriété donnée de la composition cosmétique et le contrôle de l'injection du fluide de façon à obtenir la propriété sélectionnée et/ou son niveau attendu.

14. Procédé selon la revendication précédente, la propriété sélectionnée étant relative à la couleur de la composition ou à son pouvoir colorant.

15. Procédé selon l'une quelconque des revendications précédentes, les solutions étant recueillies dans un récipient (R).

16. Procédé selon la revendication 15, le récipient contenant au moins un composé à mélanger avec les solutions.

17. Procédé selon l'une quelconque des revendications précédentes, le fluide comportant de l'eau.

18. Procédé selon la revendication 17, le fluide étant de l'eau.

19. Procédé selon l'une quelconque des revendications précédentes, la température du fluide étant supérieure à 80 °C.

20. Procédé selon l'une quelconque des revendications précédentes, le fluide injecté étant sous phases vapeur et liquide.

21. Procédé selon l'une quelconque des revendications précédentes, la pression du fluide injecté étant supérieure ou égale à 1 bar, mieux 3 bars, encore mieux 10 bars.

22. Procédé selon l'une quelconque des revendications précédentes, la ou les solutions issues de l'extraction étant reçues dans un récipient.

23. Appareil d'extraction (31) permettant de faire circuler, notamment percoler, au moins un fluide (L) dans une pluralité d'enceintes afin de préparer une composition cosmétique, comportant :
- un système d'injection (30) comportant une pluralité d'injecteurs pour injecter au moins un fluide dans une pluralité d'enceintes,
- un système de support (40) de la pluralité d'enceintes,
- un système de collecte (R) des solutions provenant de la circulation du fluide dans les enceintes, agencé pour mélanger les solutions.

24. Appareil selon la revendication 23, comportant en outre des moyens de sélection permettant de sélectionner la ou les enceintes où l'injection du fluide a lieu.

25. Appareil selon la revendication 23 ou 24, comportant en outre des moyens de contrôle (60, 61) de la quantité de fluide délivrée par chacun des injecteurs.

26. Appareil selon la revendication 25, comportant en outre un système de contrôle (61, 100) pour commander les moyens de contrôle en fonction d'au moins une propriété recherchée de la composition, notamment sa teinte.

27. Appareil selon l'une quelconque des revendications 23 à 26, le fluide injecté étant sous pression d'au moins 3 bars et à une température supérieure à 80 °C.

28. Appareil selon l'une quelconque des revendications 23 à 27, le fluide étant sous phases vapeur et liquide.

29. Appareil selon l'une quelconque des revendications 23 à 28, le fluide étant de l'eau.

30. Ensemble permettant de préparer une composition cosmétique, comportant :
- une pluralité d'enceintes contenant des produits cosmétiques différents,
- un appareil d'extraction (31) comportant une pluralité d'injecteurs afin d'injecter un fluide dans au moins une enceinte sélectionnée et recueillir au moins une solution par circulation du fluide dans la ou les enceintes sélectionnées.

31. Ensemble selon la revendication 30, les enceintes appartenant à une même recharge.

32. Ensemble selon la revendication 31, la recharge comportant une pluralité de capsules (50) solidaires définissant respectivement les différentes enceintes.

33. Ensemble selon l'une quelconque des revendications 30 à 32, l'appareil comportant un système de chauffage pour porter la température du fluide à plus de 80 °C avant l'injection.

34. Ensemble selon l'une quelconque des revendications 30 à 33, l'appareil étant agencé pour élever la pression du fluide injecté à au moins 1 bar, mieux au moins 3 bars, encore mieux au moins 10 bars.

35. Ensemble selon l'une quelconque des revendications 30 à 34, l'appareil d'extraction (31) comportant un système de sélection (100) agencé pour permettre à un utilisateur de sélectionner une teinte parmi plusieurs et agencé pour commander l'injection du fluide afin de recueillir une composition cosmétique dont la teinte correspond à la teinte sélectionnée.
